# EUROPEAN PATENT APPLICATION

(11) **EP 3 588 333 A1**
(43) Date of publication of application: **01.01.2020**
(21) Application number: 18196850.4
(22) Date of filing: 26.09.2018
(51) Int. Cl.: G06F 17/50

(54) **METHOD AND DEVICE FOR ACQUIRING WORKING CONDITION PERFORMANCE PARAMETERS OF ENGINE HOOD**

(30) Priority: 28.06.2018 CN 201810691899
(71) Applicant: Dong Han New Energy Automotive Technology Co., Ltd, 201801 Shanghai (CN)
(72) Inventor: Wang, Wei, Shanghai, 201801 (CN)
(74) Representative: Soria Parra, Manuel

(57) **Abstract**

The present invention relates to a method and device for acquiring working condition performance parameters of an engine hood. The method includes: acquiring a microstructure diagram of a composite material; acquiring a mechanical property constant value of the composite material according to the microstructure diagram; and acquiring the working condition performance parameters of the engine hood according to the mechanical property constant value of the composite material and a finite element model of the engine hood, the material of the engine hood including the composite material. The microstructure diagram of the composite material can be closer to that of a real material, thus ensuring that the mechanical property of the composite material acquired according to the microstructure diagram is closer to a real situation, i.e., macroscopic mechanical property parameters closer to those of the real material can be acquired.

## Description

### TECHNICAL FIELD

The present invention relates to the technical field of designing an engine hood of automobile, and in particular to a method and a device for acquiring working condition performance parameters of an engine hood.

### BACKGROUND

As one of the outer cover parts of automobile, the engine hood of automobile needs to resist the impact load received by the automobile in use, and a rigidity requirement on dent resistance is also required for the engine hood. Therefore, in the implementation of an integration design of structure and material of an engine hood of composite material, it is necessary to accurately estimate the working condition performance of the engine hood so that the design of the engine hood can be optimized through the acquired working condition performance parameters.

At present, when acquiring working condition performance parameters of the engine hood, a finite element model of a representative volume element of composite material under different machine-woven parameters is established on the basis of the volume fraction of the fiber acquired by observation to calculate an elastic property constant value of the composite material by the Chamis formula; and then the performance parameters of the engine hood under various working conditions are acquired by simulation on the basis of finite element modeling of the engine hood in combination with the above elastic property constant value.

The above method is to, when acquiring working condition performance parameters of the engine hood, establish a finite element model of the representative volume element of composite material on the basis of the volume fraction acquired by observation. The finite element model of the representative volume element of composite material acquired by the method is different from a real composite material to a certain extent, so that the subsequently acquired performance parameters of the engine hood under various working conditions are not accurate.

### SUMMARY

In order to overcome the problems in the art, embodiments of the present invention provide a method and a device for acquiring working condition performance parameters of an engine hood. The technical solutions are summarized as follows.

According to a first aspect of the embodiment of the present invention, there is provided a method for acquiring working condition performance parameters of an engine hood, including:
acquiring a microstructure diagram of a composite material;
acquiring a mechanical property constant value of the composite material according to the microstructure diagram; and
acquiring the working condition performance parameters of the engine hood according to the mechanical property constant value of the composite material and a finite element model of the engine hood, the material of the engine hood including the composite material.

The technical solution provided by the embodiment of the present invention may bring about the following advantageous effects: acquiring a microstructure diagram of a composite material; acquiring a mechanical property constant value of the composite material according to the microstructure diagram; and acquiring the working condition performance parameters of the engine hood according to the mechanical property constant value of the composite material and a finite element model of the engine hood, the material of the engine hood including the composite material. The microstructure diagram of the composite material can be closer to that of a real material, thus ensuring that the mechanical property of the composite material acquired according to the microstructure diagram is closer to a real situation, i.e., macroscopic mechanical property parameters closer to those of the real material can be acquired. As a result, the accuracy of the working condition performance parameters of the engine hood acquired by the subsequent calculation is effectively improved.

In an embodiment, acquiring a mechanical property constant value of the composite material according to the microstructure diagram includes:
acquiring a mechanical property constant value of each material in the composite material according to the microstructure diagram;
acquiring multiple sets of weaving parameters, the weaving parameters including: spacing of adjacent materials and the number of layers of the composite material;
establishing a representative volume element of the composite material corresponding to the weaving parameters according to the microstructure diagram for each of the multiple sets of weaving parameters; and
acquiring a mechanical property constant value of the composite material according to the mechanical property constant value of each material in the composite material and the representative volume element of the composite material.

In an embodiment, acquiring a mechanical property constant value of the composite material according to the mechanical property constant value of each material in the composite material and the representative volume element of the composite material includes:
performing a duplication operation on the representative volume element of the composite material according to a frame model of the engine hood to acquire a target representative volume element of the composite material; and
acquiring a mechanical property constant value of the composite material according to the mechanical property constant value of each material in the composite material and the target representative volume element of the composite material.

In an embodiment, the microstructure diagram includes at least two diagrams;
establishing a representative volume element of the composite material corresponding to the weaving parameters according to the microstructure diagram includes:
selecting a corresponding microstructure diagram for each layer of the composite material according to a preset rule; and
establishing a representative volume element of the composite material corresponding to the weaving parameters according to the selected microstructure diagram and the weaving parameters.

In an embodiment, acquiring a microstructure diagram of the composite material includes:
filling a preset model with a first material in the composite material, according to a preset geometric variable value of the first material, the preset geometric variable value of the first material at least including: a diameter of the first material and a spacing between adjacent first materials; and
filling a blank area in the preset model with a second material in the composite material to acquire a microstructure diagram of the composite material.

In an embodiment, filling a blank area in the preset model with a second material in the composite material to acquire a microstructure diagram of the composite material includes:
filling a blank area in the preset model with a second material in the composite material to acquire a filled preset model;
detecting whether a volume fraction of the first material in the filled preset model is smaller than a volume fraction of the first material in a physical sample;
determining that the filled preset model is a microstructure diagram of the composite material when detecting that the volume fraction of the first material in the filled preset model is smaller than the volume fraction of the first material in the physical sample; and
updating the geometric variable value when detecting that the volume fraction of the first material in the filled preset model is greater than or equal to the volume fraction of the first material in the physical sample.

In an embodiment, the working condition performance parameters at least include at least one of the following parameters: a mounting point stiffness of the engine hood, an outer plate stiffness of the engine hood, and a wing tip stiffness of the engine hood.

According to a second aspect of the embodiments of the present invention, there is provided a device for acquiring working condition performance parameters of an engine hood, including:
a first acquiring module configured to acquire a microstructure diagram of a composite material;
a second acquiring module configured to acquire a mechanical property constant value of the composite material according to the microstructure diagram acquired by the first acquiring module; and
a third acquiring module configured to acquire the working condition performance parameters of the engine hood according to the mechanical property constant value of the composite material acquired by the second acquiring module and a finite element model of the engine hood, the material of the engine hood including the composite material.

In an embodiment, the second acquiring module includes: a first acquiring sub-module, a second acquiring sub-module, a first establishing sub-module, and a third acquiring sub-module;
the first acquiring sub-module is configured to acquire a mechanical property constant value of each material in the composite material according to the microstructure diagram acquired by the first acquiring module;
the second acquiring sub-module is configured to acquire multiple sets of weaving parameters, the weaving parameters including: spacing of adjacent materials and the number of layers of the composite material;
the first establishing sub-module is configured to establish a representative volume element of the composite material corresponding to the weaving parameters, according to the microstructure diagram acquired by the first acquiring module, for each of the multiple sets of weaving parameters acquired by the second acquiring sub-module; and
the third acquiring sub-module is configured to acquire a mechanical property constant value of the composite material according to the mechanical property constant value of each material in the composite material acquired by the first acquiring sub-module and the representative volume element of the composite material established by the first establishing sub-module.

In an embodiment, the third acquiring sub-module includes: a duplicating sub-module and a fourth acquiring sub-module;
the duplicating sub-module is configured to perform a duplication operation on the representative volume element of the composite material established by the first establishing sub-module according to a frame model of the engine hood to acquire a target representative volume element of the composite material; and
the fourth acquiring sub-module is configured to acquire a mechanical property constant value of the composite material according to the mechanical property constant value of each material in the composite material acquired by the first acquiring sub-module and the target representative volume element of the composite material.

In an embodiment, the microstructure diagram includes at least two diagrams; and the first establishing sub-module includes a selecting sub-module and a second establishing sub-module;
the selecting sub-module is configured to select a corresponding microstructure diagram for each layer of the composite material according to a preset rule; and
the second establishing sub-module is configured to establish a representative volume element of the composite material corresponding to the weaving parameters according to the microstructure diagram selected by the selecting sub-module and the weaving parameters.

In an embodiment, the first acquiring module includes a first filling sub-module and a second filling sub-module;
the first filling sub-module is configured to fill a preset model with a first material in the composite material, according to a preset geometric variable value of the first material, the preset geometric variable value of the first material at least including: a diameter of the first material and a spacing between adjacent first materials; and
the second filling sub-module is configured to fill a blank area in the preset model with a second material in the composite material to acquire a microstructure diagram of the composite material.

In an embodiment, the second filling sub-module includes a third filling sub-module, a detecting sub-module, a determining sub-module, and an updating sub-module;
the third filling sub-module is configured to fill a blank area in the preset model with a second material in the composite material to acquire a filled preset model;
the detecting sub-module is configured to detect whether a volume fraction of the first material in the preset model filled by with the third filling sub-module is smaller than a volume fraction of the first material in a physical sample;
the determining sub-module is configured to determine that the filled preset model is a microstructure diagram of the composite material when detecting by the detecting sub-module that the volume fraction of the first material in the preset model filled by with the third filling sub-module is smaller than the volume fraction of the first material in the physical sample; and
the updating sub-module is configured to update the geometric variable value when detecting by the detecting sub-module that the volume fraction of the first material in the preset model filled by with the third filling sub-module is greater than or equal to the volume fraction of the first material in the physical sample.

In an embodiment, the working condition performance parameters at least include at least one of the following parameters: a mounting point stiffness of the engine hood, an outer plate stiffness of the engine hood, and a wing tip stiffness of the engine hood.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig 1 is a flow chart showing a method for acquiring working condition performance parameters of an engine hood according to an exemplary embodiment.
Fig 2 is a picture showing results of slice microscopic observation of a three-dimensional machine-woven/woven carbon fiber composite material according to an exemplary embodiment.
Fig 3 is a microstructure diagram of a carbon fiber bundle in a slice of a three-dimensional machine-woven/woven carbon fiber composite material according to an exemplary embodiment.
Fig. 4 is a microstructure diagram of a resin matrix in a slice of a three-dimensional machine-woven/woven carbon fiber composite material according to an exemplary embodiment.
Fig. 5 is a schematic view of mechanical properties exhibited according to an exemplary embodiment.
Fig. 6 is a schematic view of distribution of fibers in a representative volume element of a three-dimensional machine-woven/woven carbon fiber composite material according to an exemplary embodiment.
Fig. 7 is a schematic view of distribution of a resin in a representative volume element of a three-dimensional machine-woven/woven carbon fiber composite material according to an exemplary embodiment.
Fig. 8 is a schematic structural view of a representative volume element of a three-dimensional machine-woven/woven carbon fiber composite material according to an exemplary embodiment.
Fig. 9 is a schematic structural view of a representative volume element of a three-dimensional machine-woven/woven carbon fiber composite material according to an exemplary embodiment.
Fig. 10 is a schematic view of a frame model of an engine hood according to an exemplary embodiment.
Fig. 11 is a block diagram of a device for acquiring working condition performance parameters of an engine hood according to an exemplary embodiment.
Fig. 12 is a block diagram of a second acquiring module in a device for acquiring working condition performance parameters of an engine hood according to an exemplary embodiment.
Fig. 13 is a block diagram of a second acquiring sub-module in a device for acquiring working condition performance parameters of an engine hood according to an exemplary embodiment.
Fig. 14 is a block diagram of a first establishing sub-module in a device for acquiring working condition performance parameters of an engine hood according to an exemplary embodiment.
Fig. 15 is a block diagram of a first acquiring module in a device for acquiring working condition performance parameters of an engine hood according to an exemplary embodiment.
Fig. 16 is a block diagram of a second filling sub-module in a device for acquiring working condition performance parameters of an engine hood according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the present invention. Instead, they are merely examples of apparatuses and methods consistent with aspects related to the present invention as recited in the appended claims.

In the present invention, a microstructure diagram of the composite material is acquired, a mechanical property constant value of the composite material is acquired according to the microstructure diagram, and working condition performance parameters of the engine hood are acquired according to the mechanical property constant value of the composite material and the finite element model of the engine hood. The material of the engine hood includes a composite material. The microstructure diagram of the composite material can be closer to that of the real material, thus ensuring that the mechanical property of the composite material acquired according to the microstructure diagram is closer to a real situation, i.e., macroscopic mechanical property parameters closer to those of the real material can be acquired. As a result, the accuracy of the working condition performance parameters of the engine hood acquired by the subsequent calculation is effectively improved.

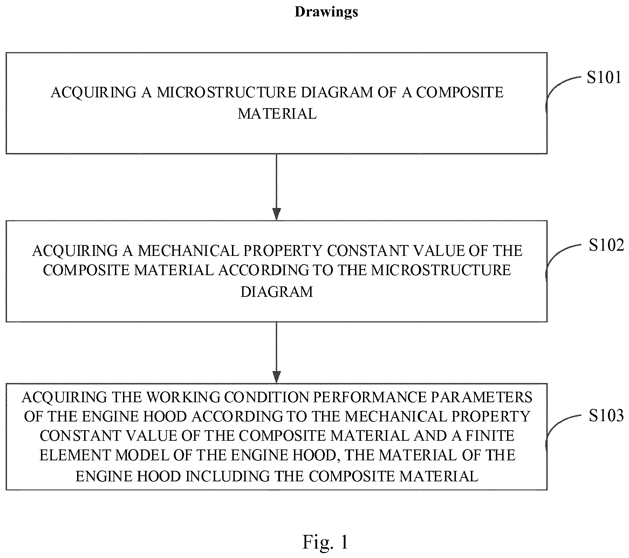

Fig. 1 is a flow chart showing a method for acquiring working condition performance parameters of an engine hood according to an exemplary embodiment. As shown in Fig. 1, the method includes the following steps S101-S103.

In step S101, a microstructure diagram of the composite material is acquired.

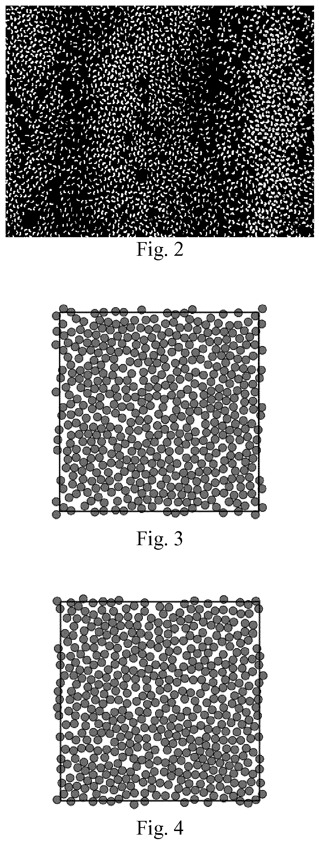

In an example in which the composite material is a three-dimensional machine-woven/woven carbon fiber composite material, the microstructure diagram acquired in this situation includes: microstructure diagrams of a carbon fiber bundle and a resin matrix. As shown in Figs. 2 to 4, Fig. 2 is a picture showing results of slice microscopic observation of a three-dimensional machine-woven/woven carbon fiber composite material according to an exemplary embodiment; Fig. 3 is a microstructure diagram of a carbon fiber bundle in a slice of a three-dimensional machine-woven/woven carbon fiber composite material according to an exemplary embodiment; and Fig. 4 is a microstructure diagram of a resin matrix in a slice of a three-dimensional machine-woven/woven carbon fiber composite material according to an exemplary embodiment.

The three-dimensional machine-woven/woven carbon fiber composite material (also called as Carbon Fiber Reinforced Plastics) is a carbon fiber reinforced composite material having a texture structure. The composite material has a matrix of carbon fibers, is formed through machine-weaving or weaving by a textile machine, and has a reinforcement body of high molecular polymer, e.g., epoxy resin.

In step S102, a mechanical property constant value of the composite material is acquired according to the microstructure diagram.

In step S103, the working condition performance parameters of the engine hood are acquired according to the mechanical property constant value of the composite material and a finite element model of the engine hood, the material of the engine hood including the composite material.

For example, the engine hood of the composite material can be finite element modeled by ABAQUS finite element software; the acquired mechanical property constant value of the composite material is input as material property; and static working condition simulation analysis is performed on the engine hood finite element model for multiple times to acquire performance parameters under working conditions of the engine hood.

The working condition performance parameters at least include at least one of the following parameters: a mounting point stiffness of the engine hood, an outer plate stiffness of the engine hood, and a wing tip stiffness of the engine hood.

In this embodiment, microscopic blending rule of individual materials in the composite material can be generated according to a slice of the composite material in combination with a preset control algorithm so as to acquire a microstructure diagram of the composite material, which is closer to that of the real composite material, thereby ensuring that mechanical property constant value of the composite material acquired according to the microstructure diagram is closer to a real situation, and thus improving accuracy of the working condition performance parameters of the engine hood acquired by the mechanical property constant value of the composite material and the finite element model of the engine hood.

Further, for methods in the prior art, it is assumed that the materials forming the composite material are completely uniformly distributed on a microscopic scale, whereas the materials forming the composite material are actually not necessarily regularly blended. Therefore, the microscopic structure is constructed according to a slice of the composite material, making the microstructure diagram closer to that of the real material.

The technical solution provided by the embodiment of the present invention may bring about the following advantageous effects: acquiring a microstructure diagram of a composite material; acquiring a mechanical property constant value of the composite material according to the microstructure diagram; and acquiring the working condition performance parameters of the engine hood according to the mechanical property constant value of the composite material and a finite element model of the engine hood, the material of the engine hood including the composite material. The microstructure diagram of the composite material can be closer to that of a real material, thus ensuring that the mechanical property of the composite material acquired according to the microstructure diagram is closer to a real situation, i.e., macroscopic mechanical property parameters closer to those of the real material can be acquired. As a result, the accuracy of the working condition performance parameters of the engine hood acquired by the subsequent calculation is effectively improved.

In an embodiment, the above step S102 includes the following sub-steps A1-A4:

In A1, the mechanical property constant value of each material in the composite material is acquired according to the microstructure diagram.

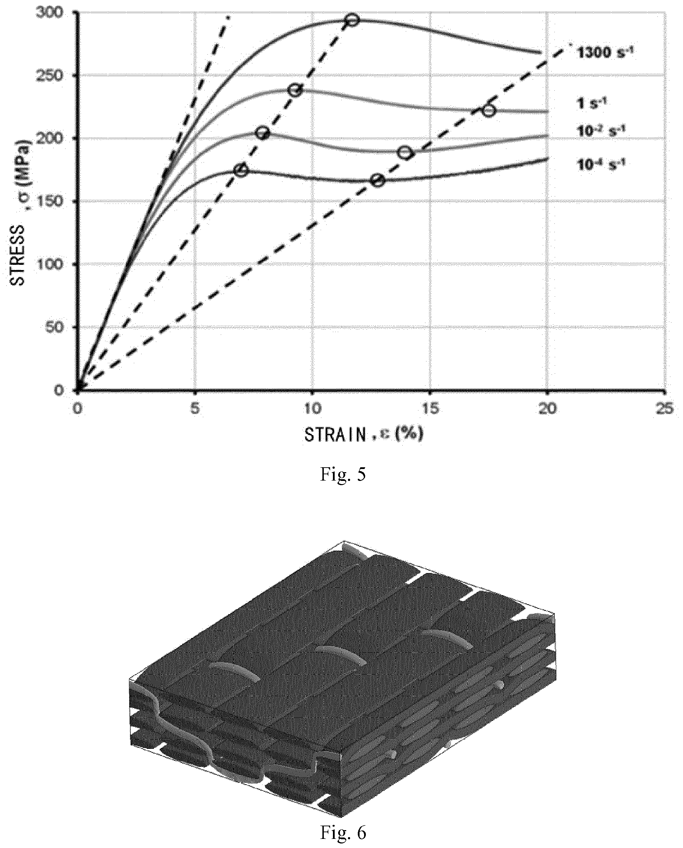

Predicting mechanical property constant values of composite materials by the Chamis formula in the prior art has limitations. As shown in Fig. 5, the Chamis formula can only predict linear elastic properties (the dashed lines in Fig. 5), and cannot predict nonlinear mechanical properties (the curves in Fig. 5); it can only be applied to uniform isotropic materials, and cannot be applied to anisotropic materials; and it neither can take non-uniformity of the material into consideration, nor can take the influence of the temperature on the properties of the material into consideration.

Therefore, an efficient method for mechanical property prediction is required for accurately predicting mechanical properties of the composite material under different weaving parameters. Moreover, the mechanical properties are not limited to linear and elastic phases, and should cover nonlinear (such as elastoplastic and viscoelastic) phases, and even the influence of the temperature on material properties should be taken into consideration.

For example, mechanical property constant values of each material in the composite material can be acquired by Digimat software according to the microstructure diagram. In this case, as shown in Fig. 5, the Digimat software contains a variety of conventional nonlinear constituents: linear elasticity, elastoplasticity, viscoelasticity, viscoelastic plastic, superelasticity, etc. The material properties predicted by the Digimat software are not limited to linear mechanical properties, but nonlinear mechanical properties can also be predicted (the curves in Fig. 5); and the Digimat software can be applied to not only uniform isotropic materials, but also to anisotropic materials. That is, the Digimat software can consider the non-uniformity of the material. In addition, the Digimat software can also consider the influence of the temperature on material properties.

In an embodiment in which the composite material is a three-dimensional machine-woven/woven carbon fiber composite material, the fiber filament used in the present embodiment is AS4 of Hexcel composite material, and the matrix is epoxy resin 3506-6. The carbon fiber filament is a transversely isotropic material. E_{1f} is defined as axial elastic modulus of the fiber, E_{2f} is transverse elastic modulus of the fiber, G_{12f} is in-plane shear modulus of the fiber, G_{23f} is out-of-plane shear modulus of the fiber, v_{12f} is main Poisson's ratio, v_{23f} is transverse Poisson's ratio, and ρ_{f} is fiber density; the matrix is isotropic material, and Em is matrix elastic modulus, Gm is matrix shear modulus, vₘ is matrix Poisson's ratio, and ρₘ is matrix density. Using the Digimat software in combination with the microstructure diagram of the three-dimensional machine-woven/woven carbon fiber composite material, mechanical property constant values of fiber filaments in the three-dimensional machine-woven/woven carbon fiber composite material as shown in Table 1, and mechanical property constant values of the matrix in the three-dimensional machine-woven/woven carbon fiber composite material as shown in Table 2 are acquired.

**Table 1 Mechanical Property Constant Values of Fiber Filaments**

| | type | E_{1f}(GPa) | E_{2f}(GPa) | ν_{12f} | ν_{23f} | G_{12f}(GPa) | G_{23f}(GPa) | ρ_{f}(g/cm³) |
|---|---|---|---|---|---|---|---|---|
| fiber | Carbon fiber | 235 | 15 | 0.2 | 0.2 | 27 | 7 | 1.8 |

**Table 2 Mechanical Property Constant Values of the Matrix**

| | type | Em(GPa) | νₘ | Gm(GPa) | ρₘ(g/cm³) |
|---|---|---|---|---|---|
| matrix | epoxy resin 3506-6 | 4.3 | 0.35 | 1.6 | 1.27 |

Further, using the Digimat software in combination with the microstructure diagram of the three-dimensional machine-woven/woven carbon fiber composite material, the mechanical property constant values of the fiber bundles having a fiber volume fraction of 70% in the three-dimensional machine-woven/woven carbon fiber composite material as shown in Table 3 are acquired. E₁ is axial elastic modulus of the fiber bundle, E₂ is transverse elastic modulus of the fiber bundle, G₁₂ is in-plane shear modulus of the fiber bundle, G₂₃ is out-of-plane shear modulus of the fiber bundle, and v₁₂ is main Poisson's ratio.

**Table 3 Mechanical Property Constant Values of the Fiber Bundles Having a Fiber Volume Fraction of 70%**

| | E₁(GPa) | E₂(GPa) | ν₁₂ | ν₂₃ | G₁₂(GPa) | G₂₃(GPa) |
|---|---|---|---|---|---|---|
| Digimat | 77 | 75 | 0.06 | 0.06 | 6.5 | 3 |

In A2, multiple sets of weaving parameters are acquired, the weaving parameters including: spacing of adjacent materials and the number of layers of the composite material.

In A3, a representative volume element of the composite material corresponding to the weaving parameters is established according to the microstructure diagram for each of the multiple sets of weaving parameters.

It should be noted that the types contained in the above weaving parameters are only examples, and are not limited to the above two types in practical application.

The representative volume element (referred to as RVE for short), also known as a unit cell model, is effective means to study such composite materials as multi-phase bodies with multi scales and discrete distribution. A typical unit as selected must be small enough to represent meso-scale structural features of the material, and meanwhile large enough to represent full physical properties of the composite material. This simplified element is called a representative volume element.

The representative volume element of the three-dimensional machine-woven/woven carbon fiber composite material acquired by different weaving parameters can be quickly established by using the Digimat software. For example, the weaving parameters are shown in Table 4:

**Table 4 Weaving Parameters**

| Weaving parameters | Number of warp yarns | Number of weft yarns | Number of layers | Weaving depth | Weaving method | Weaving type |
|---|---|---|---|---|---|---|
| value | 8 | 4 | 4 | 4 | Two steps | diagonal |

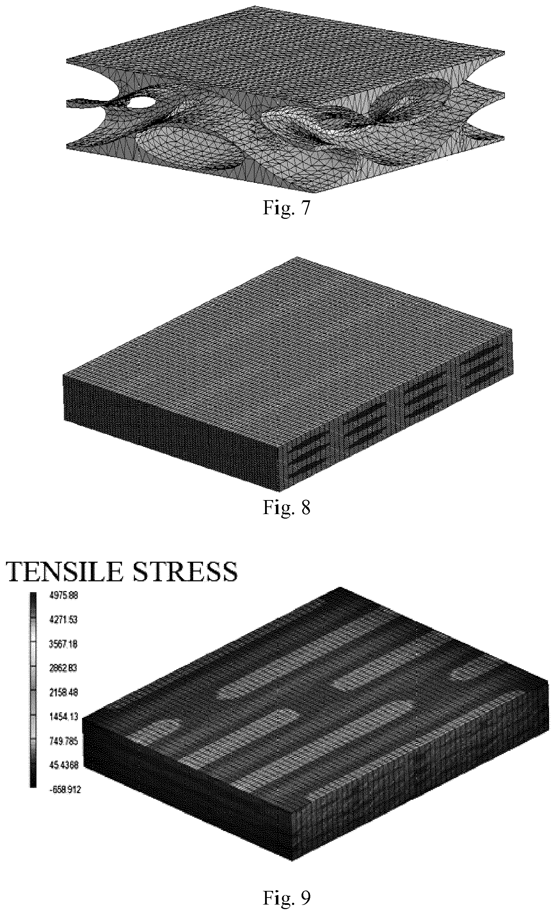

The Digimat software establishes a representative volume element of a three-dimensional machine-woven/woven carbon fiber composite material based on the weaving parameters in Table 4. Fig. 6 is a schematic view of distribution of fibers in a representative volume element of a three-dimensional machine-woven/woven carbon fiber composite material according to an exemplary embodiment, and Fig. 7 is a schematic view of distribution of a resin in a representative volume element of a three-dimensional machine-woven/woven carbon fiber composite material according to an exemplary embodiment.

In A4, a mechanical property constant value of the composite material is acquired according to the mechanical property constant value of each material in the composite material and the representative volume element of the composite material.

After the representative volume element of the three-dimensional machine-woven/woven carbon fiber composite material is acquired, the representative volume element of the three-dimensional machine-woven/woven carbon fiber composite material is mesh-divided by the Digimat software, and the meshed representative volume element of the three-dimensional machine-woven/woven carbon fiber composite material is introduced into ABAQUS to form a unit type of C3D8R, as shown in Fig. 8.

The mechanical property constant value of each material in the three-dimensional machine-woven/woven carbon fiber composite material is given to the representative volume element of the three-dimensional machine-woven/woven carbon fiber composite material, and a local coordinate system of a fiber bundle is established to define a main direction of the fiber bundle, thereby establishing a mesoscopic finite element model of the representative volume element of the three-dimensional machine-woven/woven carbon fiber composite material. The mechanical property constant value of the three-dimensional machine-woven/woven carbon fiber composite material is acquired by the mesoscopic finite element model of the representative volume element of the three-dimensional machine-woven/woven carbon fiber composite material.

In an embodiment, the above step A4 includes the following sub-steps B1-B2.

In B1, a target representative volume element of the composite material is acquired by a duplication operation on the representative volume element of the composite material according to a frame model of the engine hood.

In B2, a mechanical property constant value of the composite material is acquired according to the mechanical property constant value of each material in the composite material and the target representative volume element of the composite material.

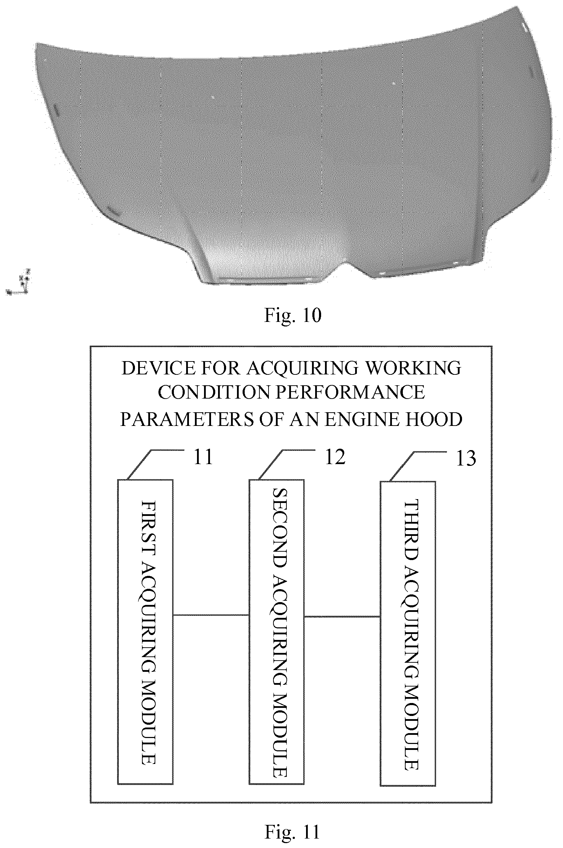

As shown in Fig. 9, in order to make the representative volume element of the composite material as acquired satisfy the symmetry and periodicity, the representative volume element of the composite material needs to be duplicated according to the frame model of the engine hood as shown in Fig. 10 to acquire a target representative volume element of the composite material, and then the mechanical property constant value of the composite material is acquired according to the mechanical property constant value of each material in the composite material and the target representative volume element of the composite material.

Since the target representative volume element of the composite material can be closer to the shape of the engine hood, the mechanical property constant value of the composite material as acquired is more accurate.

In an embodiment, the microstructure diagram includes at least two diagrams; and the above step A2 includes the following sub-steps C1-C2.

In C1, a corresponding microstructure diagram is selected for each layer of the composite material according to a preset rule.

In C2, a representative volume element of the composite material corresponding to the weaving parameters is established according to the selected microstructure diagram and the weaving parameters.

Since individual materials in each layer of the actual composite material is not necessarily regularly blended, i.e., they can also be anisotropic materials, a corresponding microstructure diagram may be selected for each layer of the composite material according to a preset rule. Accordingly, the representative volume element of the composite material as established is closer to the real material, and non-uniformity of the material can be considered.

The present invention has no limitations on the preset rule.

In an embodiment, the above step S101 includes the following sub-steps D1-D2.

In D1, according to a preset geometric variable value of a first material in the composite material, a preset model is filled with the first material; the preset geometric variable value of the first material at least includes a diameter of the first material and spacing between adjacent first materials.

In D2, a blank area in the preset model is filled with a second material in the composite material to acquire a microstructure diagram of the composite material.

Microstructure of the material can be generated using Matlab software and Python scripting language. Specifically, according to a result of slice microscopic observation, the preset geometric variable value of the first material is input into the Matlab software. Then, the Matlab software fills the first material in the preset model, and the second material in the composite material is further filled in the blank area in the preset model to acquire the microstructure diagram of the composite material.

In an example in which the composite material is a three-dimensional machine-woven/woven carbon fiber composite material, the preset model in this case is a fiber hard core model. The preset geometrical variable value of the carbon fiber material is input into the Matlab software. Then, the Matlab software fills the carbon fiber material in the fiber hard core model, and resin is further filled in a blank area in the fiber hard core model to acquire a microstructure diagram of the three-dimensional machine-woven/woven carbon fiber composite material.

Of course, in practical applications, the microstructure diagram may also be acquired by using other simulation software and programming languages, on which the present invention has no limitations.

The first material is filled in the preset model by using the preset geometric variable value of the first material in the composite material, and then the second material is filled in the blank area in the preset model, thereby effectively reducing the complexity of the steps of acquiring the microstructural diagram.

In an embodiment, the above step D2 includes the following sub-steps E1-E4.

In E1, the blank area in the preset model is filled with the second material in the composite material to acquire a filled preset model.

In E2, it is detected whether a volume fraction of the first material in the filled preset model is smaller than a volume fraction of the first material in a physical sample.

In E3, when it is detected that the volume fraction of the first material in the filled preset model is smaller than the volume fraction of the first material in the physical sample, it is determined that the filled preset model is a microstructure diagram of the composite material.

In E4, the geometric variable value is updated when it is detected that the volume fraction of the first material in the filled preset model is greater than or equal to the volume fraction of the first material in the physical sample.

In order to make the microstructure diagram as acquired more consistent with the real physical sample, in the filling process, after the blank area in the preset model is filled with the second material in the composite material to acquire the filled preset model, it is also necessary to detect whether the volume fraction of the first material in the filled preset model is smaller than the volume fraction of the first material in the physical sample. When it is detected that the volume fraction of the first material in the filled preset model is smaller than the volume fraction of the first material in the physical sample, it is determined that the filled preset model is a microstructure diagram of the composite material, and when it is detected that the volume fraction of the first material in the filled preset model is greater than or equal to the volume fraction of the first material in the physical sample, the geometry variable value is updated and the preset model is refilled based on the updated geometry variable value.

By detecting the magnitude relationship between the volume fraction of the first material in the filled preset model and the volume fraction of the first material in the physical sample, the microstructure diagram as acquired is closer to the physical sample.

Further, after acquiring the working condition performance parameters of the engine hood, the effectiveness of optimization result can be verified by finite element simulation, thereby optimizing the engine hood of the composite material.

In the optimization of the engine hood, target values of the working condition performance parameters of the engine hood are: 1) mounting point stiffness of the engine hood: the value of mounting point stiffness of the engine hood is ≥50N/mm, (deformation is ≤ 1mm after a force of 50N is applied); 2) outer plate stiffness of the engine hood: the value of outer plate stiffness of the engine hood is ≥100N/mm, (deformation is ≤3mm after a force of 300N is applied); loading of a ball head having a diameter of 25.4 with a loading point being the geometric center of the outer plate and the maximum unsupported area; 3) other stiffness of the engine hood (for example, wing tip stiffness of the engine hood): recommended value of stiffness is ≥100N/mm (deformation is ≤ 3 mm after a force of 300 N is applied).

The followings are embodiments of the device of the present invention, which can be used to implement the embodiments of the method of the present invention.

Fig. 11 is a block diagram of a device for acquiring working condition performance parameters of an engine hood according to an exemplary embodiment. As shown in Fig. 11, a device for acquiring working condition performance parameters of the engine hood includes:
a first acquiring module 11 configured to acquire a microstructure diagram of a composite material;
a second acquiring module 12 configured to acquire a mechanical property constant value of the composite material according to the microstructure diagram acquired by the first acquiring module 11; and
a third acquiring module 13 configured to acquire the working condition performance parameters of the engine hood according to the mechanical property constant value of the composite material acquired by the second acquiring module 12 and a finite element model of the engine hood, the material of the engine hood including the composite material.

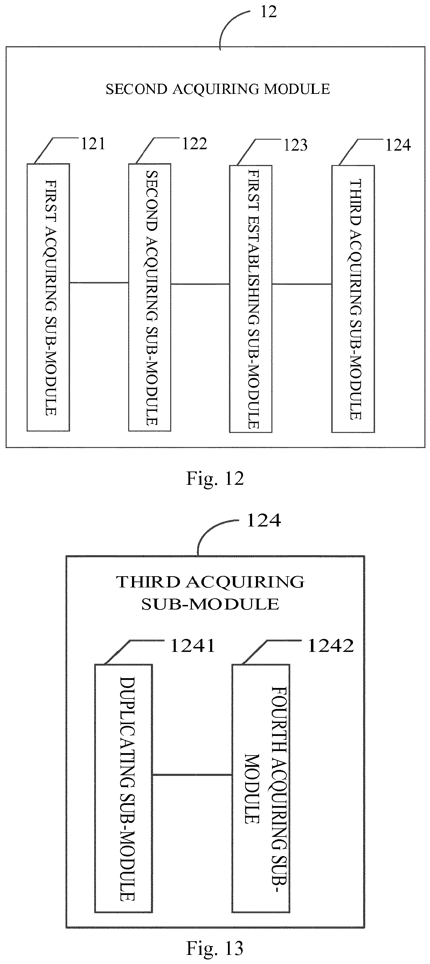

In an embodiment, as shown in Fig. 12, the second acquiring module 12 includes: a first acquiring sub-module 121, a second acquiring sub-module 122, a first establishing sub-module 123, and a third acquiring sub-module 124;
the first acquiring sub-module 121 is configured to acquire a mechanical property constant value of each material in the composite material according to the microstructure diagram acquired by the first acquiring module 11;
the second acquiring sub-module 122 is configured to acquire multiple sets of weaving parameters, the weaving parameters including: spacing of adjacent materials and the number of layers of the composite material;
the first establishing sub-module 123 is configured to establish a representative volume element of the composite material corresponding to the weaving parameters, according to the microstructure diagram acquired by the first acquiring module 121, for each of the multiple sets of weaving parameters acquired by the second acquiring sub-module 122; and
the third acquiring sub-module 124 is configured to acquire a mechanical property constant value of the composite material according to the mechanical property constant value of each material in the composite material acquired by the first acquiring sub-module 121 and the representative volume element of the composite material established by the first establishing sub-module 123.

In an embodiment, as shown in Fig. 13, the third acquiring sub-module 124 includes: a duplicating sub-module 1241 and a fourth acquiring sub-module 1242;
the duplicating sub-module 1241 is configured to perform a duplication operation on the representative volume element of the composite material established by the first establishing sub-module 123 according to a frame model of the engine hood to acquire a target representative volume element of the composite material; and
the fourth acquiring sub-module 1242 is configured to acquire a mechanical property constant value of the composite material according to the mechanical property constant value of each material in the composite material acquired by the first acquiring sub-module 121 and the target representative volume element of the composite material acquired by the duplicating sub-module 1241.

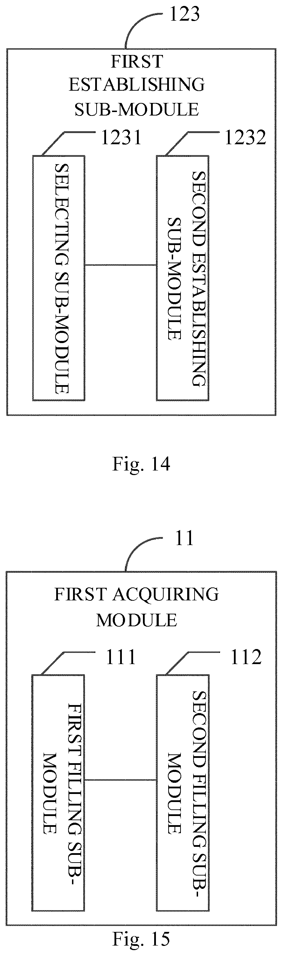

In an embodiment, as shown in Fig. 14, the microstructure diagram includes at least two diagrams; and the first establishing sub-module 123 includes a selecting sub-module 1231 and a second establishing sub-module 1232;
the selecting sub-module 1231 is configured to select a corresponding microstructure diagram for each layer of the composite material according to a preset rule; and
the second establishing sub-module 1232 is configured to establish a representative volume element of the composite material corresponding to the weaving parameters according to the microstructure diagram selected by the selecting sub-module 1231 and the weaving parameters.

In an embodiment, as shown in Fig. 15, the first acquiring module 11 includes a first filling sub-module 111 and a second filling sub-module 112;
the first filling sub-module 111 is configured to fill a preset model with a first material in the composite material, according to a preset geometric variable value of the first material, the preset geometric variable value of the first material at least including: a diameter of the first material and a spacing between adjacent first materials; and
the second filling sub-module 112 is configured to fill a blank area in the preset model with a second material in the composite material to acquire a microstructure diagram of the composite material.

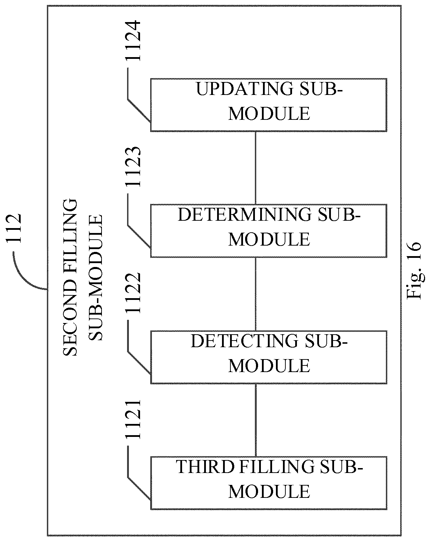

In an embodiment, as shown in Fig. 16, the second filling sub-module 112 includes a third filling sub-module 1121, a detecting sub-module 1122, a determining sub-module 1123, and an updating sub-module 1124;
the third filling sub-module 1121 is configured to fill a blank area in the preset model with a second material in the composite material to acquire a filled preset model;
the detecting sub-module 1122 is configured to detect whether a volume fraction of the first material in the preset model filled by with the third filling sub-module 1121 is smaller than a volume fraction of the first material in a physical sample;
the determining sub-module 1123 is configured to determine that the filled preset model is a microstructure diagram of the composite material when it is detected by the detecting sub-module 1122 that the volume fraction of the first material in the preset model filled by with the third filling sub-module 1121 is smaller than the volume fraction of the first material in the physical sample; and
the updating sub-module 1124 is configured to update the geometric variable value when it is detected by the detecting sub-module 1122 that the volume fraction of the first material in the preset model filled by with the third filling sub-module 1121 is greater than or equal to the volume fraction of the first material in the physical sample.

In an embodiment, the working condition performance parameters at least include at least one of the following parameters: a mounting point stiffness of the engine hood, an outer plate stiffness of the engine hood, and a wing tip stiffness of the engine hood.

Other embodiments of the present invention will be apparent to those skilled in the art from consideration of the specification and practice of the present invention. This application is intended to cover any variations, uses, or adaptations of the present invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for acquiring working condition performance parameters of an engine hood, comprising:
acquiring (S101) a microstructure diagram of a composite material;
acquiring (S102) a mechanical property constant value of the composite material according to the microstructure diagram; and
acquiring (S103) the working condition performance parameters of the engine hood according to the mechanical property constant value of the composite material and a finite element model of the engine hood, wherein the material of the engine hood comprises the composite material.

2. The method of claim 1, wherein acquiring (S102) a mechanical property constant value of the composite material according to the microstructure diagram comprises:
acquiring (A1) a mechanical property constant value of each material in the composite material according to the microstructure diagram;
acquiring (A2) multiple sets of weaving parameters, wherein the weaving parameters comprises: spacing of adjacent materials and the number of layers of the composite material;
establishing (A3) a representative volume element of the composite material corresponding to the weaving parameters according to the microstructure diagram for each of the multiple sets of weaving parameters; and
acquiring (A4) a mechanical property constant value of the composite material according to the mechanical property constant value of each material in the composite material and the representative volume element of the composite material.

3. The method of claim 2, wherein acquiring (A4) a mechanical property constant value of the composite material according to the mechanical property constant value of each material in the composite material and the representative volume element of the composite material comprises:
performing (B1) a duplication operation on the representative volume element of the composite material according to a frame model of the engine hood to acquire a target representative volume element of the composite material; and
acquiring (B2) a mechanical property constant value of the composite material according to the mechanical property constant value of each material in the composite material and the target representative volume element of the composite material.

4. The method of claim 2, wherein the microstructure diagram comprises at least two diagrams; and
establishing (A3) a representative volume element of the composite material corresponding to the weaving parameters according to the microstructure diagram comprises:
selecting a corresponding microstructure diagram for each layer of the composite material according to a preset rule; and
establishing a representative volume element of the composite material corresponding to the weaving parameters according to the selected microstructure diagram and the weaving parameters.

5. The method of claim 1, wherein acquiring (S101) a microstructure diagram of the composite material comprises:
filling (D1) a preset model with a first material in the composite material, according to a preset geometric variable value of the first material, wherein the preset geometric variable value of the first material at least comprises: a diameter of the first material and a spacing between adjacent first materials; and
filling (D2) a blank area in the preset model with a second material in the composite material to acquire a microstructure diagram of the composite material.

6. The method of claim 5, wherein filling (D2) a blank area in the preset model with a second material in the composite material to acquire a microstructure diagram of the composite material comprises:
filling (E1) a blank area in the preset model with a second material in the composite material to acquire a filled preset model;
detecting (E2) whether a volume fraction of the first material in the filled preset model is smaller than a volume fraction of the first material in a physical sample;
determining (E3) that the filled preset model is a microstructure diagram of the composite material when detecting that the volume fraction of the first material in the filled preset model is smaller than the volume fraction of the first material in the physical sample; and
updating (E4) the geometric variable value when detecting that the volume fraction of the first material in the filled preset model is greater than or equal to the volume fraction of the first material in the physical sample.

7. The method of claim 1, wherein the working condition performance parameters at least comprise at least one of the following parameters: a mounting point stiffness of the engine hood, an outer plate stiffness of the engine hood, and a wing tip stiffness of the engine hood.

8. A device for acquiring working condition performance parameters of an engine hood, comprising:
a first acquiring module (11) configured to acquire a microstructure diagram of a composite material;
a second acquiring module (12) configured to acquire a mechanical property constant value of the composite material according to the microstructure diagram acquired by the first acquiring module (11); and
a third acquiring module (13) configured to acquire the working condition performance parameters of the engine hood according to the mechanical property constant value of the composite material acquired by the second acquiring module (12) and a finite element model of the engine hood, wherein the material of the engine hood comprises the composite material.

9. The device of claim 8, wherein the second acquiring module (12) comprises: a first acquiring sub-module (121), a second acquiring sub-module (122), a first establishing sub-module (123), and a third acquiring sub-module (124);
the first acquiring sub-module (121) is configured to acquire a mechanical property constant value of each material in the composite material according to the microstructure diagram acquired by the first acquiring module (11);
the second acquiring sub-module (122) is configured to acquire multiple sets of weaving parameters, wherein the weaving parameters comprises: spacing of adjacent materials and the number of layers of the composite material;
the first establishing sub-module (123) is configured to establish a representative volume element of the composite material corresponding to the weaving parameters, according to the microstructure diagram acquired by the first acquiring module (11), for each of the multiple sets of weaving parameters acquired by the second acquiring sub-module (122); and
the third acquiring sub-module (124) is configured to acquire a mechanical property constant value of the composite material according to the mechanical property constant value of each material in the composite material acquired by the first acquiring sub-module (121) and the representative volume element of the composite material established by the first establishing sub-module (123).

10. The device of claim 9, wherein the third acquiring sub-module (124) comprises: a duplicating sub-module (1241) and a fourth acquiring sub-module (1242);
the duplicating sub-module (1241) is configured to perform a duplication operation on the representative volume element of the composite material established by the first establishing sub-module (123) according to a frame model of the engine hood to acquire a target representative volume element of the composite material; and
the fourth acquiring sub-module (1242) is configured to acquire a mechanical property constant value of the composite material according to the mechanical property constant value of each material in the composite material acquired by the first acquiring sub-module (121) and the target representative volume element of the composite material.

11. The device of claim 9, wherein the microstructure diagram comprises at least two diagrams; and the first establishing sub-module (123) comprises a selecting sub-module (1231) and a second establishing sub-module (1232);
the selecting sub-module (1231) is configured to select a corresponding microstructure diagram for each layer of the composite material according to a preset rule; and
the second establishing sub-module (1232) is configured to establish a representative volume element of the composite material corresponding to the weaving parameters according to the microstructure diagram selected by the selecting sub-module and the weaving parameters.

12. The device of claim 8, wherein the first acquiring module (11) comprises a first filling sub-module (111) and a second filling sub-module (112);
the first filling sub-module (111) is configured to fill a preset model with a first material in the composite material, according to a preset geometric variable value of the first material, wherein the preset geometric variable value of the first material at least comprises: a diameter of the first material and a spacing between adjacent first materials; and
the second filling sub-module (112) is configured to fill a blank area in the preset model with a second material in the composite material to acquire a microstructure diagram of the composite material.

13. The device of claim 12, wherein the second filling sub-module (112) comprises a third filling sub-module (1121), a detecting sub-module (1122), a determining sub-module (1123), and an updating sub-module (1124);
the third filling sub-module (1121) is configured to fill a blank area in the preset model with a second material in the composite material to acquire a filled preset model;
the detecting sub-module (1122) is configured to detect whether a volume fraction of the first material in the preset model filled by with the third filling sub-module (1121) is smaller than a volume fraction of the first material in a physical sample;
the determining sub-module (1123) is configured to determine that the filled preset model is a microstructure diagram of the composite material when detecting by the detecting sub-module (1122) that the volume fraction of the first material in the preset model filled by with the third filling sub-module (1121) is smaller than the volume fraction of the first material in the physical sample; and
the updating sub-module (1124) is configured to update the geometric variable value when detecting by the detecting sub-module (1122) that the volume fraction of the first material in the preset model filled by with the third filling sub-module (1121) is greater than or equal to the volume fraction of the first material in the physical sample.

14. The device of claim 8, wherein the working condition performance parameters at least comprise at least one of the following parameters: a mounting point stiffness of the engine hood, an outer plate stiffness of the engine hood, and a wing tip stiffness of the engine hood.
